(19) Europäisches Patentamt
European Patent Office
Office européen des brevets

(11) EP 4 083 100 A1

# (12) EUROPEAN PATENT APPLICATION

(43) Date of publication:
**02.11.2022 Bulletin 2022/44**

(21) Application number: **21170564.5**

(22) Date of filing: **26.04.2021**

(51) International Patent Classification (IPC):
***C08G 18/00*** *(2006.01)* ***C08G 18/10*** *(2006.01)*
***C08G 18/16*** *(2006.01)* ***C08G 18/75*** *(2006.01)*

(52) Cooperative Patent Classification (CPC):
**C08G 18/755; C08G 18/003; C08G 18/10;**
**C08G 18/166;** C08G 18/168

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventors:
- **Westhues, Stefan**
**51379 Leverkusen (DE)**
- **Wolf, Aurel**
**42489 Wülfrath (DE)**
- **Laemmerhold, Kai**
**52078 Aachen (DE)**
- **Latorre Martinez, Irene Cristina**
**51373 Leverkusen (DE)**
- **Guertler, Christoph**
**50735 Köln (DE)**
- **Weikard, Jan**
**51375 Leverkusen (DE)**
- **Woods, Laura**
**47051 Duisburg (DE)**
- **Ludewig, Michael**
**51519 Odenthal (DE)**

(74) Representative: **Levpat**
**c/o Covestro AG**
**Gebäude 4825**
**51365 Leverkusen (DE)**

## (54) METHOD FOR THE PRODUCTION OF AN ISOCYANATE-GROUP TERMINATED POLYOXAZOLIDINONE COMPOSITION

(57) The invention is related to a process for producing an isocyanate-group terminated polyoxazolidinone composition comprising the copolymerization of a polyisocyanate compound with two or more isocyanate groups with a polyepoxide compound with two or more epoxy groups in the presence of phosphorous and/or antimony catalyst, wherein the molar ratio of the isocyanate groups of the polyisocyanate compound to the epoxy groups of the polyepoxide compound is larger than 2:1 and less than 25:1, and wherein the process is conducted in the absence of a solvent with a boiling point higher than 200 °C, at 1 bar (absolute). The invention is also related to the resulting isocyanate-group terminated polyoxazolidinone compositions and a process for producing an isocyanate-group terminated polyoxazolidinone by removal of a solvent and/or unreacted polyisocyanate compound..

EP 4 083 100 A1

## Description

The invention is related to a process for producing an isocyanate-group terminated polyoxazolidinone composition comprising the copolymerization of a polyisocyanate compound with two or more isocyanate groups with a polyepoxide compound with two or more epoxy groups in the presence of phosphorous and/or antimony catalyst, wherein the molar ratio of the isocyanate groups of the polyisocyanate compound to the epoxy groups of the polyepoxide compound is larger than 2:1 and less than 25:1, and wherein the process is conducted in the absence of a solvent with a boiling point higher than 200 °C, at 1 bar (absolute). The invention is also related to the resulting isocyanate-group terminated polyoxazolidinone compositions and a process for producing an isocyanate-group terminated polyoxazolidinone by removal of a solvent and/or unreacted polyisocyanate compound.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones especially for application of oxazolidinones as structural motif in polymer applications.

The scientific publication J. Polym. Sci. 8 (1970) 2759-2773 discloses polyoxazolidinones prepared from various bisepoxides and various diisocyanates in the presence of alkaline metal halide catalysts. A solution of equimolar bisepoxide and diisocyanate amounts is added dropwise to a reactor containing a LiCl catalyst dissolved in DMF under reflux conditions within 1 h and a subsequent post reaction of 12 to 23 h was carried out under reflux conditions in order to complete the reaction.

US 4,129,695 A teaches a polymer comprising oxazolidinone and carbodiimide prepared from polyisocyanates and polyepoxides, wherein these compounds can be a diisocyanate or a diepoxide, wherein the ratio of number of isocyanate groups to the number of epoxide groups is between 1.1:1 and 20:1, preferably 1.2:1 and 10:1, wherein tertiary aliphatic, cycloaliphatic and aromatic amines, such as triethylene diamine (DABCO) were applied as catalyst for the oxazolidinone formation.

In Flores et al. (Thermochmica Acta (Elsevier) Vol. 543 (2012) pages 188 to 196) disclose a producing isocyanate-group terminated polyoxazolidinone reacting 4-toluene-2,4,-diisocyanate with a diglycedylether of Bisphenol A in the presence of ytterbium triflate, wherein the molar ratio of 4-toluene-2,4,-diisocyanate to the diglycedylether of Bisphenol A is 2:1.

In Pelzer et al. (European Polymer Journal 107 (2018)) oxazolidinone formation was investigated by reaction of 4,4-methylene diphenyl diisocyanate (MDI) with o-cresyl glycidyl ether (OGCE) or Bisphenol A diglycidyl ether (BADGE) in the presence of various tetra-n-butyl ammonium halides, wherein molar BADGE to MDI ratios from 1 to 3 up to 3 to 1 were applied. However, significant amounts of side products, i.e. isocyanurates, were detected operating at a BADGE to MDI ratios of 3 to 1 forming epoxy-terminated oxazolidinones. If a molar BADGE to MDI ratio of 1 to 3 was applied no isocyanate-terminated oxazolidinone formation were possible in the presence of the applied tetra-n-butyl ammonium halide catalysts.

WO 2020/249472 A1 discloses a process for producing an isocyanate-group terminated polyoxazolidinone comprising the copolymerization of a polyisocyanate compound with two or more isocyanate groups with a polyepoxide compound with two or more epoxy groups in the presence of a catalyst (C) and in a solvent, wherein LiCl or LiBr as alkali metal halogenides were applied as catalysts in a mixture of ortho-dichlorobenzene and sulfolane as solvents.

Objective of the present invention was to identify a simple process for the preparation of isocyanate-group terminated polyoxazolidinone compositions and isocyanate-group terminated polyoxazolidinone (prepolymers) with defined isocyanate equivalent weights preferably in combination with a low polydispersity for further polymerization applications. In this context, side reactions, e.g. by formation of isocyanurates or polyurethanes should be significantly reduced or beneficially be avoided. Thus, an increased oxazolidinone to isocyanate (trimer) ratio compared to state of the art systems are beneficial. In addition, the oxazolidinone products should have a similar low coloring or preferably even be less colored with respect to systems described in prior art. Such isocyanate-group terminated polyoxazolidinones prepolymer systems should be also meltable for further polymerization applications.

In addition, high amounts of high boiling solvent causes energy-intensive and time-consuming removal process e.g. by distillation, and can negatively impact subsequent extrusion and injection molding processes of the polyoxazolidinones, such as unwanted foaming, unsuitable viscosity and explosive atmosphere. Therefore, the solvent that is in general necessary for the synthesis of the polyoxazolidinone should be quantitatively removed e.g. by distillation.

Surprisingly, it has been found that the problem can be solved by a process for producing an isocyanate-group terminated polyoxazolidinone composition comprising copolymerizing of a polyisocyanate compound (A) with two or more isocyanate groups with a polyepoxide compound (B) with two or more epoxy groups in the presence of a catalyst (C) and optionally in a solvent (D); wherein the molar ratio of the isocyanate groups of the polyisocyanate compound (A) to the epoxy groups of the polyepoxide compound (B) is larger than 2:1 and less than 25:1; and wherein the catalyst (C) is represented by the formula (I)

$$[M(R1)(R2)(R3)(R4)]^{+}_{n}\ Y^{n-} \qquad (I)$$

wherein M is phosphorous or antimony, preferred phosphorous,
wherein (R1), (R2), (R3), and (R4) are each, independently of one another a linear or branched alkyl groups containing 1 to 22 carbon atoms, optionally substituted with one or more heteroatoms,heteroatom containing substituents, or a combination thereof; a cycloaliphatic groups containing 3 to 22 carbon atoms, optionally substituted with one or more heteroatoms, heteroatom containing substituents, or a combination thereof; a C1 to C3 alkyl-bridged cycloaliphatic groups containing 3 to 22 carbon atoms, optionally substituted with one or more heteroatoms,heteroatom containing substituents, or a combination thereof; or an aryl groups containing 6 to 18 carbon atoms, optionally substituted with one or more alkyl groups containing 1 to 10 carbon atoms one or more heteroatom containing substituents one or more heteroatoms, or a combination thereof,
wherein Y is a halide, carbonate, nitrate, sulfate or phosphate anion, more preferred a halide or carbonate and
wherein n is an integer of 1, 2 or 3,
, and wherein the process is conducted in the absence of a solvent (E) with a boiling point higher than 200 °C, preferably higher than 190 °C and more preferably higher than 180 °C at 1 bar (absolute).

As used herein, the term "polyoxazolidinone" is meant to denote compounds containing at least two oxazolidinone groups in the molecule. The term "isocyanate-group terminated" polyoxazolidinone is related to polyoxazolidinone compounds, wherein the molar ratio of the isocyanate groups of the polyisocyanate compound (A) to the epoxy groups of the polyepoxide compound (B) is larger than 2:1, so no terminal epoxy groups are present within the polyoxazolidinone compound according to the present invention.

As used herein, the term "polyoxazolidinone composition" is meant to denote a composition that comprises the isocyanate-group terminated polyoxazolidinone and the solvent (D) and/or unreacted polyisocyanate compound (A) if the solvent (D) is present.

All embodiments of the present invention can be combined unless the logical teaching clearly suggests that the embodiments cannot be combined.

In an embodiment of the method according to the invention the copolymerization process is performed at a reaction temperature of ≥ 130 °C to ≤ 280 °C, preferably at a temperature of ≥ 140 °C to ≤ 240 °C, more preferred at a temperature of ≥ 155 °C to ≤ 210 °C. If temperatures below 130 °C are set, the reaction is generally very slow. At temperatures above 280 °C, the amount of undesirable secondary products increases considerably.

In an embodiment of the method according to the invention the copolymerization process is performed at reaction times of 5 min to 20 h, preferably at 10 min to 10 h and more preferably at 15 min to 6 h.

As used herein, the term "polyisocyanate compound" is meant to denote compounds having two or more isocyanate groups.

In an embodiment of the method according to the invention, the polyisocyanate compound (A) is an aliphatic polyisocyanate compound (A-1) and/or an aromatic polyisocyanate compound (A-2), preferably an aliphatic polyisocyanate compound (A-1).

In an embodiment of the method according to the invention, the polyisocyanate compound (A) is at least one polyisocyanate accessible in various ways, for example by phosgenation in the liquid or gas phase or by a phosgene-free route, for example by thermal urethane cleavage.

In an embodiment of the method according to the invention, the polyisocyanate compound (A) is at least one compound selected from the group consisting of polyisocyanates from the molecular weight range of 140 g/mol to 600 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbornane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates, and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

More preferred, the polyisocyanate compound (A) is at least one compound selected from the group consisting of polyisocyanates from the molecular weight range of 140 g/mol to 600 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 1,5-diisocyanato-2,2-dimethylpentane, 2,2,4- or 2,4,4-trimethyl-1,6-diisocyanatohexane, 1,8-diisocyanatooctane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299, and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,4-bis(2-isocyanatoethyl)benzene, 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, 1,3-propylene glycol diphenylether diisocyanate, triisocyanatobenzene, 2,4,6-triisocyanatotoluene, trimethylbenzene triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl] benzene and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

And most preferred, the polyisocyanate compound (A) is at least one compound selected from the group

consisting of polyisocyanates from the molecular weight range of 140 g/mol to 600 g/mol having aliphatically, cycloaliphatically, araliphatically and/or aromatically bonded isocyanate groups, examples being 1,5-diisocyanatopentane (pentamethylene diisocyanate, PDI), 1,6-diisocyanatohexane (hexamethylene diisocyanate, HDI), 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI).

A mixture of two or more of the aforementioned polyisocyanate compounds (A) can also be used.

As used herein, the term "aliphatic polyisocyanate compound" is meant to denote compounds having two or more isocyanate groups and no aromatic moieties. The aliphatic polyisocyanate compound means an araliphatic or a cycloaliphatic polyisocyanate compound.

In a preferred embodiment of the method according to the invention the polyisocyanate compound (A) is an aliphatic (A-1).

In an embodiment of the method according to the invention, the aliphatic polyisocyanate compound (A-1) is at least one compound selected from the group consisting of polyisocyanates from the molecular weight range of 140 g/mol to 400 g/mol having aliphatically or cycloaliphatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbornane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates.

More preferred, the aliphatic polyisocyanate compound (A-1) is at least one compound selected from the group consisting of polyisocyanates from the molecular weight range of 140 g/mol to 400 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 1,5-diisocyanato-2,2-dimethylpentane, 2,2,4- or 2,4,4-trimethyl-1,6-diisocyanatohexane, 1,8-diisocyanatooctane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates.

And most preferred, the aliphatic polyisocyanate compound (A-1) is one or more compound(s) and selected from the group consisting of 1,5-diisocyanatopentane (pentamethylene diisocyanate, PDI), 1,6-diisocyanatohexane (hexamethylene diisocyanate, HDI), and 1-isocyanato-3,3,5-trimethyl-5-isocyanatomethylcyclohexane (isophorone diisocyanate, IPDI).

A mixture of two or more of the aforementioned aliphatic polyisocyanate compound (A-1) can also be used.

As used herein, the term "aromatic polyisocyanate compound" is meant to denote compounds having two or more isocyanate groups and aromatic moieties.

In a less preferred embodiment of the method according to the invention the polyisocyanate compound (A) is an aromatic and/or araliphatic polyisocyanate compound (A-2).

In a preferred embodiment of the method according to the invention, the aromatic polyisocyanate compound (A-2) is at least one compound and is selected from the group consisting of araliphatic and/or aromatic diisocyanates and triisocyanateare of the molecular weight range from 160 g/mol to 600 g/mol, such as 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,4-bis(2-isocyanatoethyl)benzene, 1,4-bis(isocyanatomethyl)naphthalene, 1,2-, 1,3- and 1,4-diisocyanatobenzene (phenylene diisocyanate), 2,4- and 2,6-diisocyanatotoluene

(toluene diisocyanate, TDI), 2,3,5,6-tetramethyl-1,4-diisocyanatobenzene, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, 1,3-propylene glycol diphenylether diisocyanate, triisocyanatobenzene, 2,4,6-triisocyanatotoluene, trimethylbenzene triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828, and also those polyisocyanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

In a more preferred embodiment of the method according to the invention, the aromatic polyisocyanate compound (A-2) is at least one compound and is selected from the group consisting of araliphatic and/or aromatic diisocyanates and triisocyanates of the molecular weight range from 160 g/mol to 600 g/mol, such as 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocyanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

In a most preferred embodiment of the method according to the invention, the aromatic polyisocyanate compound (A-2) is at least one compound and is selected from the group consisting of 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI).

A mixture of two or more of the aromatic polyisocyanate compounds (A-2) can also be used.

As used herein, the term "polyepoxide compound" is meant to denote compounds having two or more epoxide groups.

In a preferred embodiment of the invention, the polyepoxide compound (B) is an aliphatic polyepoxide compound (B-1) and/or aromatic polyepoxide compound (B-2), preferably aliphatic polyepoxide compound (B-1).

In a preferred embodiment of the invention, the epoxide compound (B) is at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol A diglycidyl ether, bisphenol A diglycidyl ether, bisphenol F diglycidyl ether, bisphenol S diglycidyl ether, 9,9-bis(4-glycidyloxy phenyl)fluorine, tetrabromo bisphenol A diglycidyl ether, tetrachloro bisphenol A diglycidyl ether , tetramethyl bisphenol A diglycidyl ether, tetramethyl bisphenol F diglycidyl ether, tetramethyl bisphenol S diglycidyl ether, diglycidyl terephthalate, diglycidyl o-phthalate, trimellitic acid triglycidyl ester, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, polybutadiene diepoxide, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, limonene diepoxide, the diepoxides of double unsaturated fatty acid C1 - C18 alkyl esters, polyepoxides of double unsaturated ethoxylated fatty alcohols, 2-dihydroxybenzene diglycidyl ether , 1,4-dihydroxybenzene diglycidyl ether, 4,4'-(3,3,5-trimethylcyclohexyliden)bisphenyl diglycidyl ether and diglycidyl isophthalate, tetrabromobisphenol A diglycidyl ether, cardanol-based diglycidyl ether, Hydrochinone diglycidyl ether, 4,4'-dihydroxy benzene diglycidyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether diglycidyl ether, as well as chlorinated and brominated varieties of the aforementioned components.

Aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, propanediol diglycidyl ether, isosorbidediglycidyl ether, octanediol diglycidyl ether, trimethylolpropane polyglycidyl ether, glycerol polyethylene triglycidyl ether, 2-ethyl hexyl diglycidyl ether.

More preferred the polyepoxide compound (B) is selected from the group consisting of neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, propanediol diglycidyl ether, isosorbide diglycidyl ether, 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether, bisphenol A diglycidyl ether, bisphenol F diglycidyl ether, bisphenol S diglycidyl ether.

Most preferred the polyepoxide compound (B) is selected from the group consisting of ethanediol diglycidyl ether, butanediole diglycidyl ether, hexanediol diglycidyl ether, trimethylopropane triglycidyl ether, glycerol triglycidyl ether.

A mixture of two or more of the aforementioned polyepoxide compounds (B) can also be used.

As used herein, the term "aliphatic polyepoxide compound" is meant to denote compounds having two or more epoxide groups and also aromatic moieties. The aliphatic polyepoxide compound means an araliphatic or a cycloaliphatic polyepoxide compound.

In a preferred embodiment of the invention the polyepoxide compound (B) is an aliphatic polyepoxide compound (B-1).

In a preferred embodiment of the invention, the aliphatic polyepoxide compound (B-1) is one or more compound(s) and is selected from the group consisting of neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, propanediol diglycidyl ether, 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether.

In a more preferred embodiment of the invention, the aliphatic polyepoxide compound (B-1) is one or more compound(s) and is selected from the group consisting of hydrogenated bisphenol A diglycidyl ether, polyethylene glycol diglycidyl ether, polypropylene glycol diglycidyl ether, glycerol triglycidyl ether, polyglycidyl ether of ethoxylated trimethylolpropane, poly(tetramethylene-oxid) diglycidyl ether, pentaeritrol polyglycidyl ether, the diepoxides of double unsaturated fatty acid C1 - C18 alkyl esters, aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, 1,4-butanediol diglycidyl ether, 1,6-hexanediol diglycidyl ether, trimethylolpropane polyglycidyl ether, glycerol polyethylene triglycidyl ether, 2-ethyl hexyl diglycidyl ether, isosorbide diglycidyl ether.

Most preferred the aliphatic polyepoxide compound (B-1) is one or more compound(s) and is selected from the group consisting of of ethanediol diglycidyl ether, butanediole diglycidyl ether, hexane diol diglycidyl ether, trimethylolpropane triglycidyl ether, and glycerol triglycidyl ether.

A mixture of two or more of the aforementioned aliphatic polyepoxide compounds (B-1) can also be used.

As used herein, the term "aromatic polyepoxide compound" is meant to denote compounds having two or more epoxide groups and also aromatic moieties.

In an alternative preferred embodiment of the invention the polyepoxide compound (B) is an aromatic polyepoxide (B-2).

In a preferred embodiment of the invention, aromatic polyepoxide compound (B-2) is one or more compound(s) and is selected from the group consisting of resorcinol diglycidyl ether, bisphenol A diglycidyl ether, bisphenol F diglycidyl ether, bisphenol S diglycidyl ether, 9,9-bis(4-glycidyloxy phenyl)fluorine, tetrabromo bisphenol A diglycidyl ether, tetrachloro bisphenol A diglycidyl ether , tetramethyl bisphenol A diglycidyl ether, tetramethyl bisphenol F diglycidyl ether, tetramethyl bisphenol S diglycidyl ether, diglycidyl terephthalate, diglycidyl o-phthalate, trimellitic acid triglycidyl ester, 1,4-cyclohexane dicarboxylic acid diglycidyl ester, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, tetrabromobisphenol A, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether, as well as chlorinated and brominated varieties of the aforementioned components.

In a more preferred embodiment of the invention, aromatic polyepoxide compound (B-2) is one or more compound(s) and is selected from the group consisting of bisphenol A diglycidyl ether, bisphenol F diglycidyl ether, bisphenol S diglycidyl ether, tetramethyl bisphenol A diglycidyl ether, tetramethyl bisphenol F diglycidyl ether, tetramethyl bisphenol S diglycidyl ether, diglycidyl terephthalate, diglycidyl o-phthalate, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether.

In a most preferred embodiment of the invention, aromatic polyepoxide compound (B-2) is one or more compound(s) and is selected from the group consisting of bisphenol A diglycidyl ether, bisphenol F diglycidyl ether, bisphenol S diglycidyl ether, tetramethyl bisphenol A diglycidyl ether, tetramethyl bisphenol F diglycidyl ether, tetramethyl bisphenol S diglycidyl ether, diglycidyl terephthalate, 2-dihydroxybenzene diglycidyl ether, 1,4-dihydroxybenzene diglycidyl ether, diglycidyl isophthalate,

A mixture of two or more of the aforementioned aromatic polyepoxide compounds (B-2) can also be used.

In a first alternative preferred embodiment of the invention the polyisocyanate compound (A) is an aliphatic polyisocyanate compound (A-1) and the polyepoxide compound (B) is an aliphatic polyepoxide compound (B-1).

In a second alternative less-preferred embodiment of the invention the polyisocyanate compound (A) is an aliphatic polyisocyanate compound (A-1) and the polyepoxide compound (B) is an aromatic polyepoxide compound (B-2).

In a third alternative less-preferred embodiment of the invention the polyisocyanate compound (A) is an aromatic polyisocyanate compound (A-2) and the polyepoxide compound (B) is an aliphatic polyepoxide compound (B-1).

In a fourth alternative less-preferred embodiment of the invention the polyisocyanate compound (A) is an aromatic polyisocyanate compound (A-2) and the polyepoxide compound (B) is an aromatic polyepoxide compound (B-2).

A mixture of one or more of the aforementioned aliphatic polyisocyanates (A-1), aromatic polyisocyanate compound (A-2), aliphatic polyepoxide compound (B-1) and/or aromatic polyepoxide compound (B-2) can also be used.

In a preferred embodiment of the invention, the molar ratio of the isocyanate groups of the polyisocyanate compound (A) to the epoxy groups of the polyepoxide compound (B) is from 2.6:1 to 7.0:1, preferably from 2.7:1 to 6.0:1 more preferably from 2.8:1 to 5.5:1. If the latter molar ratio is higher than 7:1, resulting in isocyanate-terminated oxazolidinone composition, the oxazolidinone groups in the overall mixture are too diluted by residual isocyanate monomer to have an impact on the properties of the final polymer, compared to a polymer being polymerized from only the monomeric polyisocyanate compound. If the molar ratio of the isocyanate groups of the polyisocyanate compound (A) to the epoxy groups of the polyepoxide compound (B) is lower than 2.6:1 the viscosity of the resulting isocyanate-group terminated polyoxazolidinone composition comprising the isocyanate-group terminated polyoxazolidinone significantly increases.

In a preferred embodiment of the invention, the process comprising:

a) placing the solvent (D) and the catalyst (C) in the reactor to provide a mixture (a)
b) placing the polyisocyanate compound (A) and the polyepoxide compound (B) in a second vessel to provide a mixture (b)
c) adding the mixture (b) to the mixture (a) to form the isocyanate-group terminated polyoxazolidinone composition (c).
d) optionally removal of solvent (D) and/or unreacted polyisocyanate compound (A) from the isocyanate-group

terminated polyoxazolidinone composition (c) forming the isocyanate-group terminated polyoxazolidinone (d).

In a first alternative preferred embodiment of the invention, the process comprises the steps:

i) Mixing the polyisocyanate compound (A), the polyepoxide compound (B), the catalyst (C) and optionally the solvent (D) forming a mixture (i);

ii) Copolymerizing the mixture (i) forming the isocyanate-group terminated polyoxazolidinone composition (ii)

iii) optionally removal of solvent (D) and/or unreacted polyisocyanate compound (A) from the isocyanate-group terminated polyoxazolidinone composition (ii) forming the isocyanate-group terminated polyoxazolidinone (iii).

In a second alternative preferred embodiment of the invention, the process comprises the steps:

alpha) Mixing the polyepoxide compound (B), at least part of the catalyst (C) and optionally at least part of the solvent (D) forming a mixture (alpha);

beta) Addition of the polyisocyanate compound (A) to the mixture (alpha) at copolymerization conditions forming an isocyanate-group terminated polyoxazolidinone composition (beta);

gamma) optionally removal of solvent (D) and/or unreacted polyisocyanate compound (A) from the isocyanate-group terminated polyoxazolidinone composition (beta) forming a isocyanate-group terminated polyoxazolidinone (gamma).

In a third alternative, less-preferred embodiment of the invention, the process comprises the steps:

(1) Mixing the polyisocyanate compound (A) and at least part of the catalyst (C) and at least part of the solvent (D) forming a mixture (1);

(2) Addition of the polyepoxide compound (B) to the mixture (a) at copolymerization conditions forming an isocyanate-group terminated polyoxazolidinone composition (2);

(3) Optionally removal of solvent (D) and/or unreacted polyisocyanate compound (A) from the isocyanate-group terminated polyoxazolidinone composition (2) forming the isocyanate-group terminated polyoxazolidinone (3).

In a preferred embodiment of the invention the catalyst (C) comprises tetraalkylphosphonium halogenide, a tetracycloalkylphosphonium halogenide, and a tetraarylphosphonium halogenide, or a combination thereof, preferably a tetraarylphosphonium halogenide.

In a more preferred embodiment of the invention the catalyst (C) is at least one compound selected from the group consisting of tetraphenylphosphonium chloride, tetraphenylphosphonium bromide, tetraphenylphosphonium iodide, bis(triphenylphosphine)iminium chloride, tetraphenylphosphonium nitrate, tetraphenylphosphonium carbonate preferably tetraphenylphosphonium chloride, tetraphenylphosphonium bromide and tetraphenylphosphonium iodide and more preferably tetraphenylphosphonium chloride and tetraphenylphosphonium bromide.

In one embodiment of the method according to the invention, the catalyst (C) is present in a molar amount of ≥20 ppm to ≤25000 ppm, preferably in an amount of ≥50 ppm to ≤ 20000 ppm, more preferred of ≥ 100 ppm to ≤ 12000 ppm, based on the theoretical mass of the employed monomers (sum of the mass of polyisocyanate compound and the polyepoxide compound (B)).

In an embodiment of the invention the solvent (D) is used.

In an embodiment of the invention the calculated mass ratio of the sum of diisocyanate compound (A), the bisepoxide compound (B), and catalyst (C) with respect to the sum of diisocyanate compound (A), the bisepoxide compound (B), the catalyst (C), and the solvent (D) ranges from 40 wt-% to 100 wt-%, preferred from 50 wt-% to 90 wt-% and more preferred from 60 wt-% to 80 wt-%.

The solvent (D) is defined in alignment to the general definition as a substance that dissolves a solute, i.e. compound (A) and/or compound (B) and/or compound (C) but does not (chemically) react with compound (A), compound (B) and/or the catalyst (C), in particular the polyisocyanate compound (A).

Suitable solvents (D) according to the invention are non-protic halogenated aromatic solvents, high-boiling non-protic aliphatic heterocyclic solvents, halogenated aromatic or aliphatic heterocyclic solvents with a boiling point equal or lower than 200 °C, preferably equal or lower than 190 °C and more preferably equal or lower than 180 °C at 1 bar

(absolute).

In an preferred embodiment of the invention the copolymerization is in the presence of a solvent (D) wherein the solvent (D) is one or more compounds and is selected from the group consisting of chlorobenzene, the different isomers of chlorobenzene, the different isomers of dichlorobenzene, dimethylformamide, N,N-dimethylacetamide, tetrahydrofurane, acetone, methyl ethyl ketone, 1,2-Dimethoxyethane, 1-Methoxy-2-(2-methoxyethoxy)ethane, the different isomers of dioxane preferably chlorobenzene and o-dichlorobenzene.

The reaction according to the invention is performed in the absence of a solvent (E) with a boiling point higher than 200 °C, preferably higher than 190 °C and more preferably higher than 180 °C at 1 bar (absolute).

Such solvents (E) include for example cyclic carbonate, such as ethylencarbonate or propylencarbonate, *N*-methylpyrrolidone (NMP) and sulfolane. The absence of this additional solvent (E) reduces the energy-intensive and time-consuming removal process, e.g. distillation, of this high boiling solvents.

In the absence of an additional solvent (E) means solvent amounts of (E) of less than 5 wt-% preferably 4 wt-% more preferably 2 wt-%.

Another aspect of the present invention is an isocyanate-group terminated polyoxazolidinone, composition obtainable by a method according to the invention.

In an embodiment of the invention, the isocyanate-group terminated polyoxazolidinone composition has a viscosity of less than 5000 mPa·s preferably of from 5 mPa·s to 2000 mPa·s and more preferably of from 10 mPa·s to 1000 mPa·s, wherein the viscosity is determined via a cone/plate rheometer from Anton Paar MCR 302. A shear rate 63 1·min-1 was used to determine the viscosity of the products. The viscosity is given in the unit mPa·s. (Following the procedure according to DIN EN ISO 3219/A.3:1994). If not indicated otherwise all measurements were performed at 25°C.

In an embodiment of the invention, the isocyanate-group terminated polyoxazolidinones compositions have isocyanate equivalent weights (IEW) of from 50 g/eq to 10000 g/eq, preferably of from 75 g/eq to 6000 g/eq more preferred of from 100 g/eq to 2000 g/eq, wherein the isocyanate equivalent weight was determined via titration according to DIN EN ISO 11909:2007.

The isocyanate equivalent weight (IEW) of the polyoxazolidinone is defined as the total mass of the substance that contains 1 equivalent of isocyanate groups.

In an embodiment of the invention, the isocyanate-group terminated polyoxazolidinones compositions have a oxazolidinone to isocyanurate ratio higher than 2.0:1 preferably of from 2.3:1 to 20.0:1 more preferably of from 2.8:1 to 10.0:1 , wherein the oxazolidione-isocyanurate ratio was determined according to the infra-red measurement method disclosed within the experimental section.

In an embodiment of the invention, the isocyanate-group terminated polyoxazolidinones compositions have an Gardner color index less than 7.0 preferably of from 1.0 to 6.5 more preferably of from 1.5 to 6.0, wherein the Gardner color index was determined according to DIN EN ISO 1557:1997.

Another aspect of the present invention is a process for producing an isocyanate-group terminated polyoxazolidinone (prepolymer), wherein the solvent (D) and/or unreacted polyisocyanate compound (A) is removed from the isocyanate-group terminated polyoxazolidinone composition obtained according the inventive process or the isocyanate-group terminated polyoxazolidinone composition obtainable according to the inventive process.

In an embodiment of the invention, the non-reacted polyisocyanate compound (A) and/or the solvent (D) is removed by thermal treatment method, preferably by distillation and/or by extraction, more preferably by thin-film evaporation.

For the removal of the solvent (D) and/or unreacted polyisocyanate compound (A) in step d), step iii), step gamma) or step (3), appropriate purification methods, e.g. thin film evaporation, can be applied. The removal of the solvent (D) and/or the unreacted polyisocyanate compound (A) can be beneficial for future polymerization applications since e.g. halogen containing solvents and/or the unreacted polyisocyanate compound (A) might disturb these polymerization reactions and negatively impact the resulting polymerization products. Moreover, the removal of the solvent (D) and/or the monomeric polyisocyanate compound (A) leads to a product with lower health risk, as the amount of hazardous monomeric polyisocyanates compound (A) and solvent (D) can be significantly reduced. The remaining isocyanate-group terminated polyoxazolidinone (prepolymer), e.g. the isocyanate-group terminated polyoxazolidinone (d), the isocyanate-group terminated polyoxazolidinone (gamma), isocyanate-group terminated polyoxazolidinone (iii) and the isocyanate-group terminated polyoxazolidinone (3) has a comparably high molecular weight and is not expected to represent a higher risk than other polyisocyanates prepolymers without solvent and with low concentrations of monomeric polyisocyanates compounds.

Another aspect of the present invention is an isocyanate-group terminated polyoxazolidinone obtainable according to the inventive process.

In an embodiment of the invention, the isocyanate-group terminated polyoxazolidinones have isocyanate equivalent weights (IEW) of from 50 g/eq to 10000 g/eq, preferably of from 75 g/eq to 6000 g/eq more preferred of from 100 g/eq to 2000 g/eq, wherein the isocyanate equivalent weight was determined via titration according to DIN EN ISO 11909:2007.

The isocyanate equivalent weight (IEW) of the polyoxazolidinone is defined as the total mass of the substance that contains 1 equivalent of isocyanate groups.

In an embodiment of the invention, the isocyanate-group terminated polyoxazolidinones have a oxazolidinone to isocyanurate ratio higher than 2.0:1 preferably of from 2.3:1 to 20.0:1 more preferably of from 2.8:1 to 10.0:1, wherein the oxazolidinone-isocyanurate ratio was determined according to the infra-red measurement method disclosed within the experimental section.

In an embodiment of the invention, the isocyanate-group terminated polyoxazolidinones have an Gardner color index less than 6.0 preferably of from 1.0 to 5.5 more preferably of from 1.5 to 5.0, wherein the Gardner color index was determined according to DIN EN ISO 1557:1997.

A further aspect of the present invention is an isocyanate-group terminated polyoxazolidinone (prepolymer) according to formula (I) formula (II) and/or formula (III)

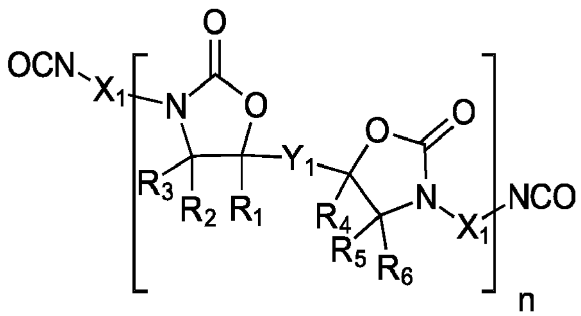

(I)

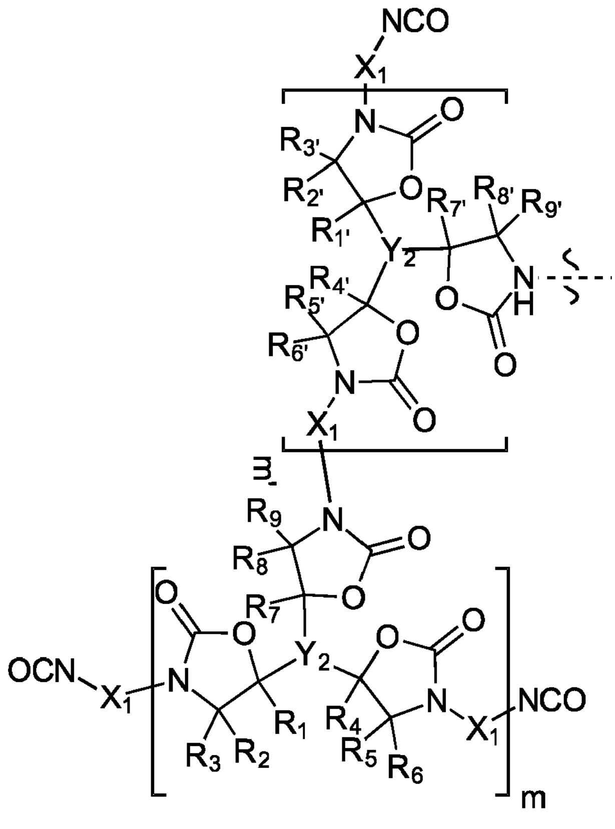

(II)

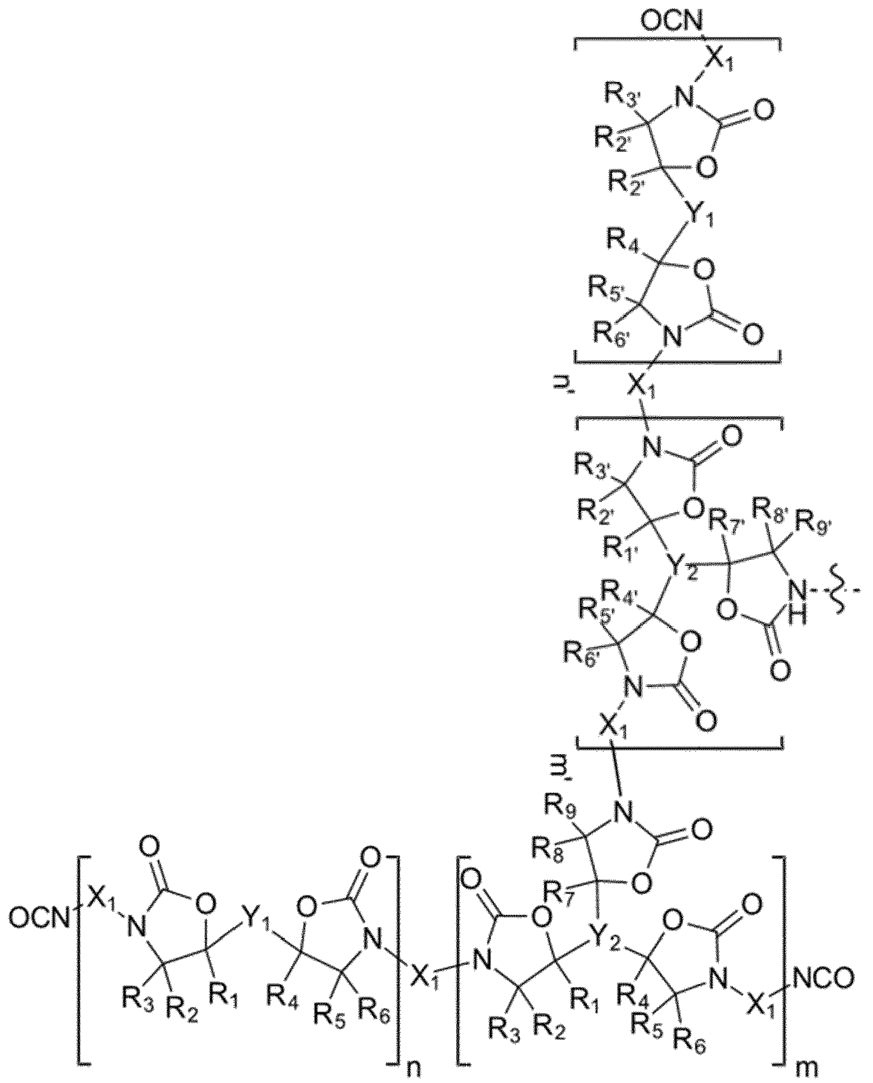

(III)

wherein

$X_1$ represents methylene, dimethylene, trimethylene, tetramethylene, pentamethylene, hexamethylene, heptamethylene, octamethylene, nonamethalene, decamethylene, unadecamethylene, dodecamethylene optionally substituted with heteroatoms containing groups, cyclohexylene, phenylene, diphenylene, dimethyl phenylene optionally comprising heteroatoms, 2-methylpentamethylene, 2,2,4-trimethyl-hexamethylene, dodecanemethylene, 1,2-cyclohexylene, 1,3-cyclohexylene, 1,4-cyclohexylene, 5-(1-methylene-(1,3,3-trimethylcyclohexane)), all regioisomers of methylene biscyclohexylene, all regioisomers of methylenebisphenylene, methylenebis-(3,3'-dimethylcyclohexane1,4-diyl), propane-2,2-diyl)bis(cyclohexane-4,1-diyl), propane-2,2-diyl-bis-4,1-phenylene, polyhexamethylene, tolylene, poly(propylene glycol) tolylene, poly(ethylene adipate) tolylene, 2,4,6-trimethyl-1,3-phenylene, 4-chloro-6-methyl-1,3-phenylene, poly[1,4-phenylene], co-poly(1,4-butanediol)], poly(tetrafluoroethylene oxide-co-difluoromethylene oxide), 1,3-bis(1-methylethyl)benzene, 3,3'-dimethyl-4,4'-biphenylene, naphthalene, 1,2-phenylene, 1,3- phenylene, 1,4-phenylene 2,4- or 2,5- or 2,6- tolylene or mixtures of these isomers, methylene 4,4'- or 2,4'- or 2,2'- bisphenylene or mixtures of these isomers, 4,4'-, 2,4'- or 2,2'- 2,2'-diphenylpropane-p-xylylene and $\alpha,\alpha,\alpha',\alpha'$-tetramethyl- m- or -p-xylylene; preferably hexamethylene diisocyanate, petamethylene diisocyanate or 5-(1-methylene-(1,3,3-trimethylcyclohexane))

$Y_1$ represents methylene, dimethylene, trimethylene, tetramethylene, pentamethylene, hexamethylene, heptamethylene, octamethylene, polyethylene, polyethyleneglycol, 1,2-cyclohexylene, 1,3-cyclohexylene, 1,4-cyclohexylene, 1,2-phenylene, 1,3-phenylene, 1,4-phenylene, 1,2-tolylene, 1,3-tolylene, 1,4-tolylene, 4,4'-methylenebis(4,1-phenylene), 4,4'-methylenebis(cyclohexane-4,1-diyl), 4,4'-(propane-2,2-diyl)bis(4,1-phenylene), propane-2,2-diyl-bis(cyclohexane-4,1-diyl) or $Y_1$ can be represented by formula IV,

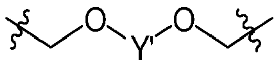 (IV)

wherein Y' is represented by methylene, dimethylene, trimethylene, tetramethylene, pentamethylene, hexamethylene, heptamethylene, octamethylene, polyethylene, polyethyleneglycol, 1,2-cyclohexylene, 1,3-cyclohexylene, 1,4-cyclohexylene, 1,2-phenylene, 1,3-phenylene, 1,4-phenylene, 1,2-tolylene, 1,3-tolylene, 1,4-tolylene, 4,4'-methylenebis(4,1-phenylene), 4,4'-methylenebis(cyclohexane-4,1-diyl), 4,4'-(propane-2,2-diyl)bis(4,1-phenylene), propane-2,2-diyl-bis(cyclohexane-4,1-diyl) or 4,4'-(3,3,5-trimethylcyclohexyliden)bisphenyl, preferably dimethylene, tetramethylene or hexamethylene, most preferred tetramethylene,

$Y_2$ can be represented by formula V

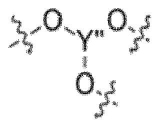 (V)

wherein Y" is represented by 1-(2,2-dimethylene)butane, 1,2,3-propane, 1,3-(2,2-dimethylene)propane, polycresyl polyglycidyl ether, novolac type glycidyl ether, preferably 1-(2,2-dimethylene)butane, 1,2,3-propane, or 1,3-(2,2-dimethylene)propane.

The illustrated molecular structures (II) and (III) illustrate exemplary parts of the whole prepolymer scaffold. Consequently, the scattered bond crossed with a wavy line represents the continuation of the partial structure. On the one hand, the substructures can be continued by single monomer building blocks, on the other hand by further (multi-dimensional) chain prolongation analogue to the depicted partial structure.

R1, R1', R2, R2', R3, R3', R4, R4', R5, R5', R6, R6', R7, R7', R8, R8', R9, R9' independent of one another represent hydrogen, chloride, bromide, fluoride, methyl, ethyl, propyl, n-propyl, isopropyl, n-butyl, isobutyl, 2-butyl, tert-butyl, hexyl, methoxy, ethoxy, butoxy, phenyl, methoxyphenyl, chlorophenyl, bromophenyl, nitrophenyl, cyclobutyl, cyclopentyl, cyclohexyl, cycloheptyl.

$X_1$, $Y_1$, $Y_2$, can be equal or different to each other,

R1, R1', R2, R2', R3, R3', R4, R4', R5, R5', R6, R6', R7, R7', R8, R8', R9, R9' can be equal or different to each other, and m, n, m', n' are an integer with $(m+n+m'+n') \geq 1$, preferably $1 \leq (m+n+m'+n') \leq 100$ more preferably $1 \leq (m+n+m'+n') \leq 50$, most preferably $1 \leq (m+n+m'+n') \leq 30$.

In an embodiment of the invention, the isocyanate-group terminated polyoxazolidinones according to formula (I) formula (II) and/or formula (III) have isocyanate equivalent weights (IEW) of from 50 g/eq to 10000 g/eq, preferably of from 75 g/eq to 6000 g/eq more preferred of from 100 g/eq to 2000 g/eq, wherein the isocyanate equivalent weight was determined via titration according to DIN EN ISO 11909:2007.

The isocyanate equivalent weight (IEW) of the polyoxazolidinone polyoxazolidinones according to formula (I) formula (II) and/or formula (III) is defined as the total mass of the substance that contains 1 equivalent of isocyanate groups.

In an embodiment of the invention, the isocyanate-group terminated polyoxazolidinones according to formula (I) formula (II) and/or formula (III) have a oxazolidinone to isocyanurate ratio higher than 2.0:1 preferably of from 2.3:1 to 20.0:1 more preferably of from 2.8:1 to 10.0:1, wherein the oxazolidione-isocyanurate ratio was determined according to the infra-red measurement method disclosed within the experimental section.

In an embodiment of the invention, the isocyanate-group terminated polyoxazolidinones polyoxazolidinones according to formula (I) formula (II) and/or formula (III) have an Gardner color index less than 6.0 preferably of from 1.0 to 5.5 more preferably of from 1.5 to 5.0, wherein the Gardner color index was determined according to DIN EN ISO 1557:1997.

## Examples

The present invention will be further described with reference to the following examples without wishing to be limited by them.

*Diisocyanate compound (A)*

A-I: Isophorone diisocyanate (IPDI), Covestro, AG, Germany.

*Epoxide compound (B)*

For the calculation of the experimental molar ratios, a compound purity of 100 % was assumed for the diepoxides compounds. Possible impurities e.g. alcoholic compounds were neglected for the calculations.

| | |
|---|---|
| B-I: IPOX RD3 | Butanediol diglycidyl ether (BDDE), EEW 130-145 g/eq; was obtained from Ipox Chemicals GmbH, Germany. Since Ipox RD 3 provides a significant amount of compounds which are not the ideal structure (BDDE), a correction factor f for the calculation of the effective molar amount of epoxy groups was calculated on the basis of the following formula: |

$$f(correction) = \frac{Mw\ (BDDE)(Ideal\ structure)}{EEW * Functionality}$$

$$= \frac{202.25\ g/mol}{132 * 2} = 0.766$$

*Catalyst (C)*

| | |
|---|---|
| C-I: TPPC1 | Tetraphenylphosphoniumchloride, purity 98 %, was obtained from Sigma Aldrich |
| C-II: TPPBr | Tetraphenylphosphoniumbromide, purity >99%, was obtained from Sigma Aldrich |
| C-II: TPPI | Tetraphenylphosphoniumiodide, was obtained from Merck Schuchardt OHG |
| C-III: LiCl | Lithium chloride, was obtained by Sigma Aldrich with >99 % purity |
| C-IV: LiBr | Lithium bromide, purity >99,9 %, was obtained from Acros Organics |
| C-V: $Yb(OTf)_3$ | Ytterbiumtris(trifluoromethansulfonat), 99.9 %, was obtained from Acros Organics |
| C-VI: TBABr | Tetrabutylammoniumbromide >99 % was obtained from Acros Organics |
| C-VII: EMIMC1 | 1-Ethyl-3-Methylimidazoliumchlorid: >97 % was obtained by Acros Organics |
| C-VIII: BMPC1 | 1-Butyl-1-Methylpiperidiniumchlorid: 99 % was obtaind by Iolitec Ionic Liquids Technologies GmbH |

The concentration of catalyst is given in ppm related to the theoretical mass of the employed monomers.

*Solvents (D)*

D-I: Ortho-dichlorobenzene (o-DCB), purity 99 %, anhydrous, was obtained from Sigma-Aldrich, Germany.

*Solvents (E)*

E-I: Sulfolane, purity ≥99 %, anhydrous, was obtained from Sigma-Aldrich, Germany.

o-DCB, IPDI, LiCl, LiBr, TPPC1, TPPBr, TPPI, TBABr, EMIMC1, BMPC1, and the BDDE were used as received without further purification. Sulfolane was used after melting at 50°C and drying over molecular sieves.

*Characterization of polyoxazolidinone prepolymers*

Infra- red analysis (IR)

IR analyses were performed on a Bruker ALPHA-P IR spectrometer equipped with a diamond probe head. The software OPUS 6.5 was used for data treatment. A background spectrum was recorded against ambient air. Thereafter, a small sample of the polyoxazolidinone prepolymer (ca. 2 mg) was applied to the diamond probe and the IR spectrum recorded averaging over 24 spectra obtained in the range of 4000 to 400 $cm^{-1}$ with a resolution of 4 $cm^{-1}$.

The peak height ratio of oxazolidinone to isocyanurate was calculated according to:

$$Ratio\ (oxazolidinone{:}\ isocyanurate) = \frac{peak\ height\ (oxazolidinone)}{peak\ height\ (isocyanurate)} \quad (1)$$

using the peak height of the peak at 1749 $cm^{-1}$ for the oxazolidinone und the height of the peak at 1685 $cm^{-1}$ for the isocyanurate.

Color Index

The Gardner color index was determined by using a Lico 620 from Hach. Therefore, a sample of the isocyanate-group terminated polyoxazolidinone composition was filled into a cuvette which was subsequently analyzed following the DIN EN ISO 1557:1997. The isolated isocyanate group terminated polyoxazolidinone prepolymer was dissolved in o-DCB (68 wt% solid content) prior to the color index measurement.

Viscosity measurements

The viscosity values were determined via a cone/plate rheometer from Anton Paar MCR 302. A shear rate 63 1·min-1 was used to determine the viscosity of the products. The viscosity is given in the unit mPa·s. (Following the procedure according to DIN EN ISO 3219/A.3:1994). If not indicated otherwise all measurements were performed at 25°C.

GPC

GPC measurements were performed at 40 °C in tetrahydrofuran (THF, flow rate of 1.0 mL $min^{-1}$). The column set consisted of 4 consecutive columns (2 x PSS, SDV 50 A, 5 μL, and 2 x PSS, SDV 100 A, 5 μL)). Samples (concentration 2-3 g $L^{-1}$ injection volume 100 μL) were injected. An RID detector of the Agilent 1200 series was used to follow the concentration at the exit of the column. Raw data were processed using the PSS WinGPC Unity software package. Polystyrene of known molecular weight was used as reference to calculate the molecular weight distribution (PSS ReadyCal Kit in an area of 266 Da to 66.000 Da was used). The number average molecular weight measured by GPC is denominated as $M_n$(GPC) in the examples.

*Reactor*

The reaction was performed in a 250 mL 4 neck round bottom flask equipped with a glass reflux condenser, a gas inlet ($N_2$), a syringe pump (IP-SYRDOS2-HP-XLP from SyrDos), a glass inlet tube equipped with a temperature probe (GFX 460 from Ebro) and an overhead KPG agitator (RW20 from IKA). The round bottom flask was heated with a heating mantle from Winkler (WM/BRI/250 with a maximum heating capacity of 120 W) which was connected to the temperature probe with an RB 1691 B-S from Ebro.

*Example 1 (comp.): Synthesis of isocyanate-terminated polyoxazolidinone-based composition with* IPDI *as compound (A-I) and with IPOX RD 3 as compound (B-I) using LiCl (C-III) as compound (C) and a solvent mixture comprising o-DCB as compound (D-I) and sulfolane as compound (E-I) in a semi-batch procedure with molar ratio of isocyanate groups to epoxy groups of 5.7:1.*

A reactor as previously described was charged with LiCl (79.5 mg, 788 ppm) (C-III). Then sulfolane (9.0 mL) (E-I) was added and the mixture was stirred (400 rpm) and flushed with nitrogen (ca. 1 mL/min) for 30 min. Subsequently, the mixture was heated to 175 °C before *o*-DCB (D-I) (17 mL) was added. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 2 (comp.): Synthesis of isocyanate-terminated polyoxazolidinone-based composition with* IPDI *as compound (A-I) and with IPOX RD 3 as compound (B-I) using LiCl (C-III) as compound (C) and a solvent mixture comprising o-DCB as compound (D-I) in a semi-batch procedure with molar ratio of isocyanate groups to epoxy groups of 5.7:1.*

A reactor as previously described was charged with LiCl (79.5 mg, 788 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes

before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 3 (comp.): Synthesis of isocyanate-terminated polyoxazolidinone-based composition with* IPDI *as compound (A-I) and with IPOX RD 3 as compound (B-I) using TBABr (C-VI) as compound (C) and a solvent mixture comprising o-DCB as compound (D-I) in a semi-batch procedure with molar ratio of isocyanate groups to epoxy groups of 5.7:1.*

A reactor as previously described was charged with TBABr (604 mg, 5960 ppm) (C-VI). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 4 (comp.): Synthesis of isocyanate-terminated polyoxazolidinone-based composition with* IPDI *as compound (A-I) and with IPOX RD 3 as compound (B-I) using TBABr (C-VI) as compound (C) in a semi-batch procedure with molar ratio of isocyanate groups to epoxy groups of 5.7:1.*

A reactor as previously described was charged with TBABr (604 mg, 5960 ppm) (C-VI). Then IPDI (16.67 g, 0.075 mol) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I) and IPDI (66.69 g, 0.30 mol) (A-I) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 5 (comp.): Synthesis of isocyanate-terminated polyoxazolidinone-based composition with* IPDI *as compound (A-I) and with IPOX RD 3 as compound (B-I) using EMIMCl (C-VII) as compound (C) and a solvent mixture comprising o-DCB as compound (D-I) in a semi-batch procedure with molar ratio of isocyanate groups to epoxy groups of 5.7:1.*

A reactor as previously described was charged with EMIMCl (275 mg, 2720 ppm) (C-VII). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 6 (comp.): Synthesis of isocyanate-terminated polyoxazolidinone-based composition with* IPDI *as compound (A-I) and with IPOX RD 3 as compound (B-I) using BMPCl (C-VIII) as compound (C) and a solvent mixture comprising o-DCB as compound (D-I) in a semi-batch procedure with molar ratio of isocyanate groups to epoxy groups of 5.7:1.*

A reactor as previously described was charged with BMPCl (348 mg, 3442 ppm) (C-VIII). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy.

The completion of the reaction was confirmed by seeing that the isocyanate band (2260 $cm^{-1}$) in the IR spectrum from the reaction mixture did not change anymore.

*Example 7 (comp.): Synthesis of isocyanate-terminated polyoxazolidinone-based composition with* IPDI *as compound (A-I) and with IPOX RD 3 as compound (B-I) using LiBr (C-IV) as compound (C) and a solvent mixture comprising o-DCB as compound (D-I) and sulfolane as compound (E-I) in a semi-batch procedure with molar ratio of isocyanate groups to epoxy groups of 5.7:1.*

A reactor as previously described was charged with LiBr (163 mg, 1613 ppm) (C-IV). Then sulfolane (9.0 mL) (E-I) was added and the mixture was stirred (400 rpm) and flushed with nitrogen (ca. 1 mL/min) for 30 min. Subsequently, the mixture was heated to 175 °C before *o*-DCB (D-I) (17 mL) was added. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 8 (comp.): Synthesis of isocyanate-terminated polyoxazolidinone-based composition with* IPDI *as compound (A-I) and with IPOX RD 3 as compound (B-I) using $Yb(OTf)_3$ (C-V) as compound (C) and a solvent mixture comprising o-DCB as compound (D-I) in a semi-batch procedure with molar ratio of isocyanate groups to epoxy groups of 5.7:1.*

A reactor as previously described was charged with $Yb(OTf)_3$ (1163 mg, 11406 ppm) (C-V). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 9: Synthesis of isocyanate-terminated polyoxazolidinone-based composition with* IPDI *as compound (A-I) and with IPOX RD 3 as compound (B-I) using TPPCl (C-I) as compound (C) and a solvent mixture comprising o-DCB as compound (D-I) in a semi-batch procedure with molar ratio of isocyanate groups to epoxy groups of 5.7:1.*

A reactor as previously described was charged with TPPC1 (703 mg, 6924 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 10: Synthesis of isocyanate-terminated polyoxazolidinone-based composition with* IPDI *as compound (A-I) and with IPOX RD 3 as compound (B-I) using TPPBr (C-II) as compound (C) and a solvent mixture comprising o-DCB as compound (D-I) in a semi-batch procedure with molar ratio of isocyanate groups to epoxy groups of 5.7:1.*

A reactor as previously described was charged with TPPBr (786 mg, 7739 ppm) (C-II). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from

the reaction mixture did not change anymore.

*Example 11: Synthesis of isocyanate-terminated polyoxazolidinone-based composition with* IPDI *as compound (A-I) and with IPOX RD 3 as compound (B-I) using TPPI(C-III) as compound (C) and a solvent mixture comprising o-DCB as compound (D-I) in a semi-batch procedure with molar ratio of isocyanate groups to epoxy groups of 5.7:1.*

A reactor as previously described was charged with TPPI (874 mg, 8599 ppm) (C-III). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.
Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 12: Synthesis of isocyanate-terminated polyoxazolidinone-based composition with* IPDI *as compound (A-I) and with IPOX RD 3 as compound (B-I) using TPPCl (C-I) as compound (C) and a solvent mixture comprising o-DCB as compound (D-I) in a semi-batch procedure with molar ratio of isocyanate groups to epoxy groups of 4:1.*

A reactor as previously described was charged with TPPCl (703 mg, 6443 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (25.03 g, 0.095 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.
Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 13: Synthesis of isocyanate-terminated polyoxazolidinone-based composition with* IPDI *as compound (A-I) and with IPOX RD 3 as compound (B-I) using TPPCl (C-I) as compound (C) and a solvent mixture comprising o-DCB as compound (D-I) in a semi-batch procedure with molar ratio of isocyanate groups to epoxy groups of 3.3:1.*

A reactor as previously described was charged with TPPCl (703 mg, 6148 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (30.26 g, 0.115 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.
Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 14: Synthesis of isocyanate-terminated polyoxazolidinone-based composition with* IPDI *as compound (A-I) and with IPOX RD 3 as compound (B-I) using TPPCl (C-I) as compound (C) and a solvent mixture comprising o-DCB as compound (D-I) in a semi-batch procedure with molar ratio of isocyanate groups to epoxy groups of 2.2:1.*

A reactor as previously described was charged with TPPCl (703 mg, 5431 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (45.35 g, 0.172 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.
Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 15: Synthesis of isocyanate-terminated polyoxazolidinone-based composition with* IPDI *as compound (A-I) and with IPOX RD 3 as compound (B-I) using TPPCl (C-I) as compound (C) and a solvent mixture comprising o-DCB as compound (D-I) in a semi-batch procedure with molar ratio of isocyanate groups to epoxy groups of 8.7:1.*

A reactor as previously described was charged with TPPCl (703 mg, 7364 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °C. Next, a mixture of IPOX RD3 (11.38 g, 0.043 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 16 (comp.): Synthesis of isocyanate-terminated polyoxazolidinone-based composition with* IPDI *as compound (A-I) and with IPOX RD 3 as compound (B-I) using TPPCl (C-I) as compound (C) and a solvent mixture comprising o-DCB as compound (D-I) in a semi-batch procedure with molar ratio of isocyanate groups to epoxy groups of 36.3:1.*

A reactor as previously described was charged with TPPCl (703 mg, 8089 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °C. Next, a mixture of IPOX RD3 (2.73 g, 0.010 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

*Example 17 (congruent with example 09): Synthesis of isocyanate-terminated polyoxazolidinone-based composition with* IPDI *as compound (A-I) and with IPOX RD 3 as compound (B-I) using TPPCl (C-I) as compound (C) and a solvent mixture comprising o-DCB as compound (D-I) in a semi-batch procedure with molar ratio of isocyanate groups to epoxy groups of 5.7:1 The polyoxazolidinone-based prepolymer was isolated from the composition via thin film evaporation.*

A reactor as previously described was charged with TPPCl (703 mg, 6924 ppm) (C-I). Then *o*-DCB (D-I) (25 mL) was added and the mixture was stirred (400 rpm) and flushed with nitrogen (ca. 1 mL/min) for 30 min. Subsequently, the mixture was heated to 175 °. Next, a mixture of IPOX RD3 (17.44 g, 0.066 mol) (B-I), IPDI (83.36 g, 0.375 mol) (A-I), and *o*-DCB (11 mL) (D-1) was added in a continuous manner within a time range of 30 minutes by using the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 $cm^{-1}$) in the IR spectrum from the reaction mixture did not change anymore.

The isocyanate-terminated polyoxazolidinone-based prepolymer was isolated from the composition by removal of the unreacted monomers and solvent thin film evaporation (180 °C and 0.3 mabar).

Table 1: Comparison of the results of Examples 1 to 16.

| Example | | Compound | | | | Molar Ratio isocyanate groups: epoxy groups | Solids content [%] | oxazolidinone to isocyanurate Ratio | Color number (Gardner scale) | Viscosity [mPa·s] |
|---|---|---|---|---|---|---|---|---|---|---|
| | | (A) | (B) | (C) | (D) | | | | | |
| 1 (comp.) | Composition | IPDI | IPOX RD 3 | LiCl | *o*-DCB, sulfolane | 5.7:1 | 68 | 1.06 | 4.3 | 276 |
| 2 (comp.) | Composition | IPDI | IPOX RD 3 | LiCl | *o*-DCB, | 5.7:1 | 68 | 0.21 | 5.3 | 824 |
| 3 (comp.) | Composition | IPDI | IPOX RD 3 | TBABr | *o*-DCB | 5.7:1 | 68 | 0,29 | 5.2 | 6 |
| 4 (comp.) | Composition | IPDI | IPOX RD 3 | TBABr | - | 5.7:1 | 100 | 0,33 | 4.4 | 16 |
| 5 (comp.) | Composition | IPDI | IPOX RD 3 | EMIMCl | *o*-DCB | 5.7:1 | 68 | 0,07 | 10.0 | 37 |
| 6 (comp.) | Composition | IPDI | IPOX RD 3 | BMPCl | o-DCB | 5.7:1 | 68 | 0,28 | 8.0 | 5 |
| 7 (comp.) | Composition | IPDI | IPOX RD 3 | LiBr | *o*-DCB, sulfolane | 5.7:1 | 68 | 1,33 | 5.2 | 138 |
| 8 (comp.)[a)] | Composition | IPDI | IPOX RD 3 | Yb $(OTf)_3$ | *o*-DCB | 5.7:1 | 68 | 1.96 | 16.3 | 62 |
| 9 | Composition | IPDI | IPOX RD 3 | TPPCl | *o*-DCB | 5.7:1 | 68 | 4.12 | 4.4 | 31 |
| 10 | Composition | IPDI | IPOX RD 3 | TPPBr | *o*-DCB | 5.7:1 | 68 | 3.93 | 3.8 | 31 |
| 11 | Composition | IPDI | IPOX RD 3 | TPPI | *o*-DCB | 5.7:1 | 68 | 2.39 | 4.8 | 29 |
| 12 | Composition | IPDI | IPOX RD 3 | TPPC1 | *o*-DCB | 4:1 | 68 | 5.03 | 4.5 | 102 |
| 13 | Composition | IPDI | IPOX RD 3 | TPPC1 | *o*-DCB | 3.3:1 | 71 | 4.80 | 5.9 | 276 |

(continued)

| Example | | Compound | | | | Molar Ratio isocyanate groups: epoxy groups | Solids content [%] | oxazolidinone to isocyanurate Ratio | Color number (Gardner scale) | Viscosity [mPa·s] |
|---|---|---|---|---|---|---|---|---|---|---|
| | | (A) | (B) | (C) | (D) | | | | | |
| 14 | Composition | IPDI | IPOX RD 3 | TPPCI | *o*-DCB | 2.2:1 | 73 | 6.03 | 5.8 | 4304 |
| 15 | Composition | IPDI | IPOX RD 3 | TPPCI | *o*-DCB | 8.7:1 | 68 | 3.58 | 4.8 | 12 |
| 16 (comp.) | Composition | IPDI | IPOX RD 3 | TPPC1 | *o*-DCB, | 36.3:1 | 68 | 2,15 | 5.3 | 4 |
| 17[b)] | Prepolymer | IPDI | IPOX RD 3 | TPPC1 | - | 5.7:1 | 100 | 3.72 | 4.1 | - |

comp.: comparative example
a): A heterogeneous reaction mixture with insoluble dark particles was obtained.
b): Prepolymer was dissolved in o-DCB (68 wt% solid content) prior to the color-number measurement.

## Claims

1. A process for producing an isocyanate-group terminated polyoxazolidinone composition comprising copolymerizing of a polyisocyanate compound (A) with two or more isocyanate groups with a polyepoxide compound (B) with two or more epoxy groups in the presence of a catalyst (C) and optionally in a solvent (D);
wherein the molar ratio of the isocyanate groups of the polyisocyanate compound (A) to the epoxy groups of the polyepoxide compound (B) is larger than 2:1 and less than 25:1;
and wherein the catalyst (C) is represented by the formula (I)

$$[M(R1)(R2)(R3)(R4)]^{+}_{n} Y^{n-} \qquad (I)$$

wherein M is phosphorous or antimony, preferred phosphorous,
wherein (R1), (R2), (R3), and (R4) are each, independently of one another a linear or branched alkyl groups containing 1 to 22 carbon atoms, optionally substituted with one or more heteroatoms, heteroatom containing substituents, or a combination thereof; a cycloaliphatic groups containing 3 to 22 carbon atoms, optionally substituted with one or more heteroatoms, heteroatom containing substituents, or a combination thereof; a C1 to C3 alkyl-bridged cycloaliphatic groups containing 3 to 22 carbon atoms, optionally substituted with one or more heteroatoms, heteroatom containing substituents, or a combination thereof; or an aryl groups containing 6 to 18 carbon atoms, optionally substituted with one or more alkyl groups containing 1 to 10 carbon atoms one or more heteroatom containing substituents one or more heteroatoms, or a combination thereof,
wherein Y is a halide, carbonate, nitrate, sulfate or phosphate anion, more preferred a halide or carbonate and wherein n is an integer of 1, 2 or 3,
, and wherein the process is conducted in the absence of a solvent (E) with a boiling point higher than 200 °C, preferably higher than 190 °C and more preferably higher than 180 °C at 1 bar (absolute).

2. The process according to claim 1, wherein the molar ratio of the isocyanate groups of the polyisocyanate compound (A) to the epoxy groups of the polyepoxide compound (B) is from 2.6:1 to 7.0:1, preferably from 2.7:1 to 6.0:1 more preferably from 2.8:1 to 5,5:1.

3. The process according to claim 1 or 2, wherein the polyisocyanate compound (A) is an aliphatic polyisocyanate compound (A-1) and/or an aromatic polyisocyanate compound (A-2), preferably an aliphatic polyisocyanate compound (A-1).

4. The process according to one of claims 1 to 3, wherein the polyepoxide compound (B) is an aliphatic polyepoxide compound (B-1) and/or aromatic polyepoxide compound (B-2), preferably aliphatic polyepoxide compound (B-1).

5. The process according to one of claims 1 to 4, wherein the polyisocyanate compound (A) is an aliphatic polyisocyanate compound (A-1) and the polyepoxide compound (B) is an aliphatic polyepoxide compound (B-1).

6. The process according to one of claim 3 to 5, wherein the aliphatic polyisocyanate compound (A-1) is one or more compound(s) and is selected from the group consisting of 1,5-diisocyanatopentane, 1,6-diisocyanatohexane, and 1-isocyanato-3,3,5-trimethyl-5-isocyanatomethylcyclohexane.

7. The process according to one of claim 3 to 6, wherein the aliphatic polyepoxide compound (B-1) is one or more compound(s) and is selected from the group consisting of ethanediol diglycidyl ether, butanediole diglycidyl ether, hexane diol diglycidyl ether, trimethylolpropane triglycidyl ether, and glycerol triglycidyl ether.

8. The process according to any one of claims 1 to 7, wherein the catalyst (C) comprises a tetraalkylphosphonium halogenide, a tetracycloalkylphosphonium halogenide, and a tetraarylphosphonium halogenide, or a combination thereof, preferably a tetraarylphosphonium halogenide.

9. The process according to any one of claims 1 to 8, wherein the catalyst (C) is at least one compound selected from the group consisting of tetraphenylphosphonium chloride, tetraphenylphosphonium bromide, tetraphenylphosphonium iodide, bis(triphenylphosphine)iminium chloride, tetraphenylphosphonium nitrate, ,tetraphenylphosphonium carbonate preferably tetraphenylphosphonium chloride, tetraphenylphosphonium bromide and tetraphenylphosphonium iodide and more preferably tetraphenylphosphonium chloride and tetraphenylphosphonium bromide.

10. The process according to any one of claims 1 to 9, wherein the copolymerization is in the solvent (D) and the solvent

(D) is one or more compounds and is selected from the group consisting of chlorobenzene, the different isomers of dichlorobenzene, dimethylformamide, N,N-dimethylacetamide, tetrahydrofurane, acetone, methyl ethyl ketone, 1,2-Dimethoxyethane, 1-Methoxy-2-(2-methoxyethoxy)ethane, the different isomers of dioxane preferably chlorobenzene and o-dichlorobenzene.

**11.** The process according to claim 10 comprising:

a) placing the solvent (D) and the catalyst (C) in the reactor to provide a mixture (a)
b) placing the polyisocyanate compound (A) and the polyepoxide compound (B) in a second vessel to provide a mixture (b)
c) adding the mixture (b) to the mixture (a) to form the isocyanate-group terminated polyoxazolidinone composition (c).

**12.** An isocyanate-group terminated polyoxazolidinone composition obtainable according to one of claims 1 or 11.

**13.** A process for producing an isocyanate-group terminated polyoxazolidinone, wherein the solvent (D) and/or unreacted polyisocyanate compound (A) is removed from the isocyanate-group terminated polyoxazolidinone composition obtained according to one of claims 1 to 11 or the isocyanate-group terminated polyoxazolidinone composition according to claim 12.

**14.** The process according to claim 13,wherein the non-reacted polyisocyanate compound (A) and/or the solvent (D) is removed by thermal treatment method, preferably by distillation and/or by extraction, more preferably by thin-film evaporation.

**15.** An isocyanate-group terminated polyoxazolidinone obtainable according to claim 14.

Europäisches Patentamt
European Patent Office
Office européen des brevets

# EUROPEAN SEARCH REPORT

Application Number
EP 21 17 0564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 86/06734 A (DOW CHEM CO)<br>20 November 1986 (1986-11-20)<br>* page 13 - page 14; example 2 *<br>* claim 2 *<br>* page 9, line 18 - line 31 *<br>* page 8, line 26 - page 9, line 11 *<br>----- | 1-15<br><br>1-14 | INV.<br>C08G18/00<br>C08G18/10<br>C08G18/16<br>C08G18/75 |
| Y | US 2017/081462 A1 (MÜLLER THOMAS ERNST [DE] ET AL) 23 March 2017 (2017-03-23)<br>* page 12; example 9 *<br>* paragraph [0088] *<br>* claim 1 *<br>* paragraph [0044] - paragraph [0055] *<br>----- | 1-14 | |
| | | | TECHNICAL FIELDS SEARCHED (IPC) |
| | | | C08G |

The present search report has been drawn up for all claims

1

| Place of search | Date of completion of the search | Examiner |
|---|---|---|
| Munich | 17 September 2021 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 17 0564

This annex lists the patent family members relating to the patent documents cited in the above-mentioned European search report. The members are as contained in the European Patent Office EDP file on The European Patent Office is in no way liable for these particulars which are merely given for the purpose of information.

17-09-2021

| Patent document cited in search report | Publication date | Patent family member(s) | Publication date |
|---|---|---|---|
| WO 8606734 A | 20-11-1986 | | |
| US 2017081462 A1 | 23-03-2017 | CN 106459331 A | 22-02-2017 |
| | | EP 3143060 A1 | 22-03-2017 |
| | | US 2017081462 A1 | 23-03-2017 |
| | | WO 2015173111 A1 | 19-11-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4129695 A
- WO 2020249472 A1
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- DE 870400 A
- DE 953012 A
- DE 1090196 A
- EP 0546399 A
- CN 105218780
- CN 103881050
- CN 101717571
- US 3183112 A
- EP 0416338 A
- EP 0751163 A
- EP 1378529 A
- EP 1378530 A
- EP 2174967 A
- JP 63260915 B
- JP 56059828 B
- DE 1670667 A
- EP 0078991 A
- EP 0696606 A
- EP 0807623 A


### Non-patent literature cited in the description


- **M. E. DYEN ; D. SWERN.** *Chem. Rev.,* 1967, vol. 67, 197
- *J. Polym. Sci.,* 1970, vol. 8, 2759-2773
- **FLORES et al.** Thermochmica Acta. Elsevier, 2012, vol. 543, 188-196
- **PELZER et al.** *European Polymer Journal,* 2018, vol. 107
- *J. Prakt. Chem.,* 1994, vol. 336, 185-200